# EUROPÄISCHE PATENTSCHRIFT

(11) **EP 0 856 645 B1**
(45) Veröffentlichungstag und Bekanntmachung des Hinweises auf die Patenterteilung: **31.07.2002**
(21) Anmeldenummer: 98101025.9
(22) Anmeldetag: 22.01.1998
(51) Int. Cl.: F01N 3/08, F02D 41/02, F01N 9/00

(54) **Verfahren zur Regelung der Temperatur einer Katalysatoranordnung sowie Vorrichtung zur Durchführung des Verfahrens**
Method to regulate the temperature of a catalytic converter arrangement and device for implementing the method
Procédé de régulation de température d'un dispositif catalyseur et dispositif pour la mise en oeuvre de ce procédé

(30) Priorität: 30.01.1997 DE 19703295
(43) Veröffentlichungstag der Anmeldung: 05.08.1998
(73) Patentinhaber: Ford Global Technologies, Inc., Dearborn, Michigan 48126 (US)
(72) Erfinder: Krzykowski, Heinrich, 58313 Herdecke (DE); Phlips, Patrick, Dr., 50858 Köln (DE); Dickers, Guido, 41068 Mönchengladbach (DE); Grieser, Klemens, 40764 Langenfeld (DE); Mayer, Thomas E., 50859 Köln (DE)
(74) Vertreter: Bonsmann, Joachim Bernhard

(56) Entgegenhaltungen:
- EP-A- 0 540 280
- DE-A- 4 334 763
- DE-A- 19 626 837
- US-A- 3 050 935
- US-A- 5 524 433
- DATABASE WPI Section Ch, Week 9742 Derwent Publications Ltd., London, GB; Class E36, AN 97-454828 XP002062164 & JP 09 209 746 A (TOYOTA JIDOSHA KK) , 12.August 1997

## Beschreibung

Die Erfindung betrifft ein Verfahren zur Regelung der Temperatur einer Katalysatoranordnung in der Abgasanlage eines Verbrennungsmotors mit einer in der Katalysatoranordnung vorgesehenen Stickoxidfalle und mit einer Einrichtung zur Veränderung der Abgastemperatur sowie eine Vorrichtung zur Durchführung des Verfahrens.

Der Einsatz einer Katalysatoranordnung mit einem konventionellen Dreiwegekatalysor und einer Stickoxidfalle (NOₓ-Trap) erfolgt bevorzugt bei Kraftfahrzeugen, deren Verbrennungsmotor für einen kraftstoffsparenden Magerbetrieb ausgelegt ist (sog. lean burn engine). Die Stickoxidfalle verringert insbesondere im Magerbetrieb auftretende Stickoxidemissionen, indem Stickoxidmoleküle an der Beschichtung der Falle angelagert und somit aus dem Abgas entfernt werden. Wenn die Aufnahmekapazität der Stickoxidfalle erschöpft ist, wird die Stickoxidfalle regeneriert, wobei die Stickoxide chemisch u.a. zu N₂ umgesetzt werden.

Die bekannten Stickoxidfallen weisen den Nachteil einer im Vergleich zu Dreiwegekatalysatoren geringeren Effizienz auf. Ein Dreiwegekatalysator vermindert die Schadstoffemissionen um typischerweise 90 bis 95%; die verfügbaren Stickoxidfallen erreichen dagegen nur Stickoxidreduktionen von typischerweise 60 bis 70%.

Eine wichtige Einflußgröße auf die Effizienz der Katalysatoranordnung ist die Temperatur. Da die Abgastemperatur am Verbrennungsmotor in einem Bereich von etwa 200 bis 1000°C variiert, sind verschiedene Lösungsansätze bekannt, die Temperatur des in den Katalysator strömenden Abgases zu beeinflussen, beispielsweise mittels in Strömungsrichtung vor der Katalysatoranordnung angeordneter und durch ein Stellglied absperrbarer Kühlschleifen in den Abgasleitungen, mittels einer zu einer geringeren Abgastemperatur führenden künstlichen Überfettung des Luft-Kraftstoffgemisches oder mittels elektrischer Beheizung der Katalysatoranordnung. Es ist bekannt, mittels dieser Vorrichtungen zur Veränderung der Abgastemperatur die Temperatur eines Dreiwegekatalysators so zu regeln, daß der Katalysator in einem bestimmten Betriebstemperaturbereich arbeitet und vor Überhitzung geschützt wird. Die bekannten Regelungen gewährleisten jedoch nicht den optimalen Betrieb einer zusätzlich in der Katalysatoranordnung angeordneten Stickoxidfalle, da die bekannten Stickoxidfallen nur in einem im Vergleich zum Dreiwegekatalysator relativ engen Temperaturbereich effizient arbeiten.

Insbesondere wird bei den bekannten Regelungen die maximal mögliche Stickoxidaufnahmerate im Magerbetrieb außerhalb der Regenerationszyklen nicht optimal ausgenutzt.

Auch ist bei bekannten Regelungen eine Überhitzung der Stickoxidfalle unter ungünstigen Betriebsbedingungen nicht ausgeschlossen.

Aus der DE 43 34 763 Al ist ein Verfahren und eine Vorrichtung zur Regelung der Temperatur einer Stickoxidfalle in der Abgasanlage eines Verbrennungsmotors bekannt. Eine Regelungseinheit erfasst dabei über einen Temperatursensor die Temperatur der die Stickoxidfalle verlassenden Abgase und sorgt durch eine Kraftstoffeinspritzung vor der Stickoxidfalle für eine Temperaturerhöhung beziehungsweise durch Einblasen von Luft vor der Stickoxidfalle für eine Temperatursenkung der Abgase. Auf diese Weise soll die Temperatur der Stickoxidfalle durchgehend in einem Bereich gehalten werden, bei dem die Stickoxidfalle einen optimalen Wirkungsgrad zeigt.

Der Erfindung liegt die Aufgabe zugrunde, ein Verfahren der eingangs genannten Art dahingehend zu verbessern, daß eine optimale Ausnutzung des Wirkungsgrads der Stickoxidfalle erreicht und eine Überhitzung der Stickoxidfalle verhindert wird.

Erfindungsgemäß wird diese Aufgabe durch die Merkmale von Anspruch 1 gelöst, wobei insbesondere die Temperatur der Stickoxidfalle bestimmt wird und die Katalysatoranordnung über die Einrichtung zur Veränderung der Abgastemperatur in einem dem optimalen Wirkungsgrad der Stickoxidfalle entsprechenden Temperaturbereich betrieben wird. Der optimale Temperaturbereich bei bekannten Stickoxidfallen liegt im Bereich von typischerweise etwa 250 bis 450°C. Der optimale Temperaturbereich für den Betrieb eines Dreiwegekatalysators ist allgemein wesentlich größer, auch ist dieser gegenüber kurzfristigen Überhitzungen nicht so empfindlich wie die Stickoxidfalle. Es ist deshalb besonders vorteilhaft, daß als Eingangsgröße der Temperaturregelung die Temperatur der Stickoxidfalle und nicht die des einströmenden Abgases oder die Temperatur des Dreiwegekatalysators herangezogen wird.

In vorteilhafter Ausgestaltung der Erfindung kann vorgesehen sein, daß der Betrieb im optimalen Wirkungsbereich der Stickoxidfalle über eine PI-Regelung mit der Temperatur der Stickoxidfalle als Eingangsgröße und einer Ausgangsgröße zur Beeinflussung der Einrichtung zur Veränderung der Abgastemperatur erfolgt. Dabei kann es sich entweder um eine kontinuierliche oder um eine diskrete (z.B. Ein/Aus-Befehl) Ausgangsgröße handeln. Durch ein Ein/Aus-Signal kann beispielsweise eine Klappe angesteuert werden, durch die das Abgas wahlweise über eine Kühlschleife geführt wird.

In vorteilhafter Ausgestaltung der Erfindung kann vorgesehen sein, daß die Bestimmung der Temperatur der Stickoxidfalle über eine Abgastemperaturmessung in räumlicher Nähe der Stickoxidfalle erfolgt. Dies ist zweckmäßig, weil eine Temperaturmessung auf der Oberfläche der Stickoxidfalle schwieriger durchzuführen ist.

Die in räumlicher Nähe der Stickoxidfalle gemessene Abgastemperatur entspricht nur näherungsweise der Temperatur der Stickoxidfalle. Deshalb erfolgt die Bestimmung der Temperatur der Stickoxidfalle über ein Temperaturmodell, also durch ein mathematisches Modell des Wärmehaushalts des Katalysators.

Das Temperaturmodell enthält als Eingangsgrößen den Abgasmassenstrom, die Wärmekapazitäten und Wärmeübergangskoeffizienten der Komponenten der Katalysatoranordnung, die Umgebungslufttemperatur und die Fahrgeschwindigkeit eines den Verbrennungsmotor aufweisenden Kraftfahrzeuges

Weiterhin kann vorgesehen sein, daß das Temperaturmodell als Eingangsgröße zusätzlich eine in räumlicher Nähe der Katalysatoranordnung gemessene Abgastemperatur enthält. Aufgrund dieser gemessenen Temperatur und des Temperaturmodells kann die jeweilige Temperatur der Stickoxidfalle vorhergesagt werden. Bei genügender Verfeinerung des Temperaturmodells ist es grundsätzlich auch möglich, auf eine Temperaturmessung zu verzichten.

Im Hinblick auf eine effektive Abgasreinigung ist es erstrebenswert, daß die Stickoxidfalle nach dem Start des Verbrennungsmotors möglichst schnell die Betriebstemperatur erreicht. Hierzu kann vorgesehen sein, daß die Einrichtung zur Veränderung der Abgastemperatur nach dem Start des Verbrennungsmotors bis zum Erreichen vorherbestimmter Bedingungen in einem Anspringmodus (light-off-mode) betrieben wird, in dem eine möglichst schnelle Aufheizung der Stickoxidfalle in einen Bereich optimalen Wirkungsgrads erreicht wird. Im Anspringmodus werden die Einrichtungen zur Veränderung der Abgastemperatur in Hinblick auf eine maximale Aufheizungsrate angesteuert, ohne daß eine Rückkopplungsregelung erfolgt. Der Anspringmodus kann bei Erreichen einer Mindesttemperatur oder nach Verstreichen einer vorgegebenen Zeit beendet werden.

Bei hohen Drehmomentanforderungen wird der Magerbetriebsmodus eines Verbrennungsmotors üblicherweise verlassen; stattdessen erfolgt ein Betrieb mit stöchiometrischem oder leicht fettem Gemisch. Dabei kann eine effiziente Abgasreinigung auch allein durch den Dreiwegekatalysator erfolgen, so daß die Einhaltung des optimalen Temperaturbereichs der Stickoxidfalle nicht zwingend erforderlich ist, solange diese nicht überhitzt wird. Deshalb kann in weiterer Ausgestaltung der Erfindung vorgesehen sein, daß eine Regelung der Abgastemperatur in einem dem optimalen Wirkungsgrad der Stickoxidfalle entsprechenden Temperaturbereich erfolgt, falls der Verbrennungsmotor mit einem mageren Luft-/Kraftstoffgemisch betrieben wird, und daß eine Regelung der Abgastemperatur in einem dem optimalen Wirkungsgrad des Katalysators entsprechenden und eine Beschädigung der Stickoxidfalle vermeidenden Temperaturbereich erfolgt, falls der Verbrennungsmotor mit einem stöchiometrischen oder fetten Luft/Kraftstoffgemisch betrieben wird.

Die Abgastemperaturveränderung kann erfindungsgemäß durch selektives Führen der Abgase vom Verbrennungsmotor zur Katalysatoranordnung über verschiedene Abgaswege, in denen unterschiedliche Abgastemperaturverluste auftreten, bewirkt werden. Die verschiedenen Abgaswege können mittels eines oder mehrerer Ventile abhängig vom Ausgangssignal der Regeleinheit geöffnet oder geschlossen werden. Diese Art der Temperaturveränderung ist besonders vorteilhaft gegenüber der bekannten Überfettung des Gemisches zum Abkühlen des Abgases, weil diese Art der Temperaturveränderung den Kraftstoffverbrauch nicht negativ beeinflußt. Außerdem ist damit eine schnelles Aufheizen der Katalysatoranordnung (gutes Anspringverhalten) und eine genaue Regelung der Stickoxidfallentemperatur möglich.

Allgemein ist im Rahmen der Erfindung auch der Einsatz anderer Einrichtungen zur wahlweisen Reduzierung der Abgastemperatur möglich. Derartige Einrichtungen sind gegenüber Einrichtungen zur wahlweisen Erhöhung der Abgastemperatur (z.B. einer elektrischen Heizung der Stickoxidfalle) vorteilhaft, da keine zusätzliche Heizenergie benötigt wird.

Weiterhin kann vorgesehen sein, daß ein Testmodus zum Testen der Funktionsfähigkeit der Regelung der Temperatur einer Katalysatoranordnung durch eine Modulation der die Einrichtung zur Veränderung der Abgastemperatur beeinflussenden Größe und Feststellen der Wirkung dieser Modulation durch Messung der Abgastemperatur in räumlicher Nähe der Katalysatoranordnung vorgesehen ist.

Eine Vorrichtung zur Durchführung des Verfahrens mit einer Katalysatoranordnung in der Abgasanlage eines Verbrennungsmotors mit einer in der Katalysatoranordnung vorgesehenen Stickoxidfalle, mit einer Einrichtung zur Veränderung der Abgastemperatur und mit einer Regeleinrichtung ist gekennzeichnet durch eine Einrichtung zur Bestimmung der Temperatur der Stickoxidfalle.

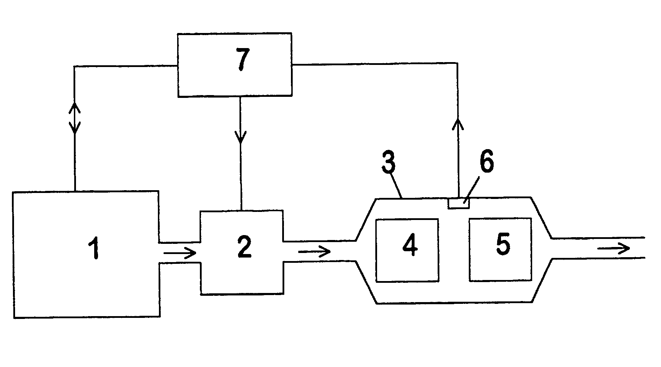

Die Erfindung wird nachfolgend anhand der Zeichnung beispielhaft erläutert.

Die einzige Figur zeigt ein schematisches Blockdiagramm einer Vorrichtung zur Durchführung des erfindungsgemäßen Verfahrens.

Ein Verbrennungsmotor 1 eines nicht dargestellten Kraftfahrzeuges steht mit einer elektronischen Motorsteuerung 7 in Verbindung. Die elektronische Motorsteuerung empfängt in bekannter Weise eine Vielzahl von Sensorausgangssignalen, wie z.B. die aktuelle Motordrehzahl oder Informationen, aus der sich das aktuell gewünschte Drehmoment berechnen läßt. Aus diesen Informationen berechnet die Motorsteuerung das erforderliche Luft-/Kraftstoffverhältnis, welches mager, stöchiometrisch oder fett sein kann. Das ermittelte Luft-/Kraftstoffverhältnis wird mittels (nicht dargestellter), dem Verbrennungsmotor 1 zugeordneter Kraftstoffdosiereinrichtungen bzw. mittels einer (ebenfalls nicht dargestellten) elektronischen Drosselklappe eingestellt. Die beim Verbrennungsprozeß entstehenden Abgase werden über einen Abgaskrümmer und eine Abgasleitung einer im Abgasweg nahe am Verbrennungsmotor angeordneten (closed coupled) Katalysatoranordnung 3 zugeführt. In der Abgasleitung ist eine Einrichtung 2 zur Veränderung der Abgastemperatur angeordnet. Die Einrichtung 2 weist zwei unterschiedliche interne Abgaswege, in denen unterschiedliche Wärmeverluste des Abgases auftreten, auf. Die elektronische Motorsteuerung 7 steuert über ein Stellglied und ein der Einrichtung 2 zugeordnetes Ventil, auf welchem Weg das Abgas durch die Einrichtung 2 strömen soll und somit die Temperatur des der Katalysatoranordnung 3 zugeführten Abgases. Die Katalysatoranordnung weist einen Dreiwegekatalysator 4 und eine nachgeschaltete Stickoxidfalle 5 auf. Im Abgasstrom zwischen Dreiwegekatalysator 4 und Stickoxidfalle 5 ist ein Temperatursensor 6 angeordnet. Die Motorsteuerung 7 erhält über den Temperatursensor 6 ein Signal, das ein Maß für die Abgastemperatur in der Nähe der Stickoxidfalle darstellt. Die Motorsteuerung 7 berechnet anhand eines Temperaturmodells der Katalysatoranordnung 3 die tatsächliche Temperatur der Stickoxidfalle 5, wobei neben der bei 6 gemessenen Abgastemperatur der Abgasmassenstrom, die Wärmekapazitäten und Wärmeübergangskoeffizienten der Komponenten der Katalysatoranordnung, die Umgebungslufttemperatur und die Fahrgeschwindigkeit berücksichtigt werden. Mittels eines softwaremäßig implementierten PI-Regelglieds regelt die Motorsteuerung 7 7 die Abgastemperatur über die Einrichtung 2 abhängig von der Temperatur der Stickoxidfalle 5 so, daß die Stickoxidfalle in einem Temperaturfenster mit optimalem Wirkungsgrad betrieben wird, wenn der Verbrennungsmotor 1 mit einem mageren Gemisch betrieben werden soll. Bei stöchiometrischem oder fettem Betrieb erfolgt dagegen eine Regelung der Abgastemperatur in einem dem optimalen Wirkungsgrad des Dreiwegekatalysators entsprechenden und eine Beschädigung der Stickoxidfalle vermeidenden Temperaturbereich. In einem Anspringmodus erfolgt zwecks möglichst schnellen Aufheizens der Katalysatoranordnung eine rückkopplungslose Steuerung der Einrichtung 2 zur Veränderung der Abgastemperatur. Weiterhin ist ein Testmodus vorgesehen, in dem die Funktionsfähigkeit der Regelung überprüft wird. Dazu wird das Ventil in der Einrichtung zur Regelung der Abgastemperatur gemäß einer Testfunktion geöffnet und geschlossen. Mittels der Motorsteuerung 7 wird überprüft, ob dies zu zeitlich korrelierten Schwankungen der Temperatur bei 6 führt. Ist dies nicht der Fall, wird eine Fehlfunktion angezeigt.

## Patentansprüche

1. Verfahren zur Regelung der Temperatur einer Katalysatoranordnung (3) in der Abgasanlage eines Verbrennungsmotors (1) mit einer in der Katalysatoranordnung vorgesehenen Stickoxidfalle (5) und mit einer Einrichtung zur Veränderung der Abgastemperatur (2), wobei die Temperatur der Stickoxidfalle bestimmt wird und die Katalysatoranordnung über die Einrichtung zur Veränderung der Abgastemperatur in einem dem optimalen Wirkungsgrad der Stickoxidfalle entsprechenden Temperaturbereich betrieben wird, **dadurch gekennzeichnet, daß** die Bestimmung der Temperatur der Stickoxidfalle (5) mit Hilfe eines Temperaturmodells erfolgt, wobei das Temperaturmodell die Eingangsgrößen Abgasmassenstrom, Wärmekapazitäten und Wärmeübergangskoeffizienten der Komponenten der Katalysatoranordnung, Umgebungslufttemperatur und Fahrgeschwindigkeit eines den Verbrennungsmotor aufweisenden Kraftfahrzeuges enthält.

2. Verfahren nach Anspruch 1, **dadurch gekennzeichnet, daß** der Betrieb im optimalen Wirkungsbereich der Stickoxidfalle über eine PI-Regelung mit der Temperatur der Stickoxidfalle als Eingangsgröße und einer Ausgangsgröße zur Beeinflussung der Einrichtung zur Veränderung der Abgastemperatur erfolgt.

3. Verfahren nach einem der Ansprüche 1 oder 2, **dadurch gekennzeichnet, daß** das Temperaturmodell als Eingangsgröße zusätzlich eine in räumlicher Nähe der Katalysatoranordnung gemessene Abgastemperatur enthält.

4. Verfahren nach einem der Ansprüche 1 bis 3, **dadurch gekennzeichnet, daß** die Einrichtung (2) zur Veränderung der Abgastemperatur nach dem Start des Verbrennungsmotors (1) bis zum Erreichen vorherbestimmter Bedingungen in einem Anspringmodus betrieben wird, in dem eine möglichst schnelle Aufheizung der Stickoxidfalle (5) in einen Bereich optimalen Wirkungsgrads erreicht wird.

5. Verfahren nach einem der Ansprüche 1 bis 4, **dadurch gekennzeichnet, daß** die Katalysatoranordnung eine Stickoxidfalle (5) und einen Katalysator (4) enthält, daß eine Regelung der Abgastemperatur in einem dem optimalen Wirkungsgrad der Stickoxidfalle (5) entsprechenden Temperaturbereich erfolgt, falls der Verbrennungsmotor (1) mit einem mageren Luft-/Kraftstoffgemisch betrieben wird, und daß eine Regelung der Abgastemperatur in einem dem optimalen Wirkungsgrad des Katalysators (4) entsprechenden und eine Beschädigung der Stickoxidfalle vermeidenden Temperaturbereich erfolgt, falls der Verbrennungsmotor mit einem stöchiometrischen oder fetten Luft-/Kraftstoffgemisch betrieben wird.

6. Verfahren nach einem der Ansprüche 1 bis 5, **dadurch gekennzeichnet, daß** die Abgastemperaturveränderung durch selektives Führen der Abgase vom Verbrennungsmotor (1) zur Katalysatoranordnung (3) über verschiedene Abgaswege, in denen unterschiedliche Abgastemperaturverluste auftreten, bewirkt wird.

7. Verfahren nach einem der Ansprüche 1 bis 6, **dadurch gekennzeichnet, daß** ein Testmodus zum Testen der Funktionsfähigkeit der Regelung der Temperatur der Katalysatoranordnung (3) durch Modulation der die Einrichtung (2) zur Veränderung der Abgastemperatur beeinflussenden Größe und Feststellen der Wirkung dieser Modulation durch Messung der Abgastemperatur in räumlicher Nähe der Katalysatoranordnung vorgesehen ist.

8. Vorrichtung zur Durchführung des Verfahrens nach einem der Ansprüche 1 bis 7 mit einer Katalysatoranordnung (3) in der Abgasanlage eines Verbrennungsmotors (1) mit einer in der Katalysatoranordnung vorgesehenen Stickoxidfalle (5), mit einer Einrichtung (2) zur Veränderung der Abgastemperatur und mit einer Regeleinrichtung (7), **gekennzeichnet durch** eine Einrichtung zur Bestimmung der Temperatur der Stickoxidfalle mit Hilfe eines Temperaturmodells, wobei das Temperaturmodell die Eingangsgrößen Abgasmassenstrom, Wärmekapazitäten und Wärmeübergangskoeffizienten der Komponenten der Katalysatoranordnung, Umgebungslufttemperatur und Fahrgeschwindigkeit eines den Verbrennungsmotor aufweisenden Kraftfahrzeuges enthält.

## Claims

1. Method of regulating the temperature of a catalytic converter arrangement (3) in the exhaust gas system of a combustion engine (1) with a nitrogen oxide trap (5) provided in the catalytic converter arrangement and with a device for changing the exhaust gas temperature (2) wherein the temperature of the nitrogen oxide trap is determined and the catalytic converter arrangement is driven via the device for changing the exhaust gas temperature in a temperature area corresponding to the optimum degree of efficiency of the nitrogen oxide trap, **characterised in that** the determination of the temperature of the nitrogen oxide trap (5) takes place with the aid of a temperature model wherein the temperature model contains the input values exhaust gas mass flow, heat capacities and heat transmission coefficients of the components of the catalytic converter arrangement, ambient air temperature and travelling speed of a motor vehicle containing the combustion engine.

2. Method according to claim 1 **characterised in that** the operation in the optimum field of efficiency of the nitrogen oxide trap takes place via a PI regulation with the temperature of the nitrogen oxide trap as the input value and an output value for influencing the device for changing the exhaust gas temperature.

3. Method according to one of the claims 1 or 2 **characterised in that** the temperature model as an input value additional contains an exhaust gas temperature measured in physical proximity to the catalytic converter arrangement.

4. Method according to one of the claims 1 to 3 **characterised in that** the device (2) for changing the exhaust gas temperature after the start of the combustion engine (1) is operated in a start-up mode until previously determined conditions are reached, wherein in this start-up mode as rapid as possible heating of the nitrogen oxide trap (5) as possible is reached into an area of optimal degree of efficiency.

5. Method according to one of the claims 1 to 4 **characterised in that** the catalytic converter arrangement contains a nitrogen oxide trap (5) and a catalytic converter (4), that a regulation of the exhaust gas temperature takes place in a temperature area corresponding to the optimum degree of efficiency of the nitrogen oxide trap (5) in the event of the combustion engine (1) being operated with lean air/fuel mixture, and that a regulation of the exhaust gas temperature in a temperature area corresponding to the optimum degree of efficiency of the catalytic converter (4) and avoiding damage to the nitrogen oxide trap in the event of the combustion engine being operated with a stoichiometric or rich air/fuel mixture.

6. Method according to one of the claims 1 to 5 **characterised in that** the exhaust gas temperature change is brought about by selective guiding of the exhaust gases from the combustion engine (1) to the catalytic converter arrangement (3) via different exhaust gas paths, in which different exhaust gas temperature losses arise.

7. Method according to one of the claims 1 to 6 **characterised in that** a test mode for testing the functioning of the regulation of the temperature of the catalytic converter arrangement (3) is provided through modulation of the value influencing the device (2) for changing the exhaust gas temperature and ascertaining the effect of this modulation through measuring the exhaust gas temperature in physical proximity to the catalytic converter arrangement.

8. Device for carrying out the method according to one of the claims 1 to 7 with a catalytic converter arrangement (3) in the exhaust gas system of a combustion engine (1) with a nitrogen oxide trap (5) provided in the catalytic converter arrangement, with a device (2) for changing the exhaust gas temperature and with a regulating device (7), **characterised by** a device for determining the temperature of the nitrogen oxide trap with the aid of a temperature model wherein the temperature model contains the input values exhaust gas mass flow, heat capacities and heat transmission coefficients of the components of the catalytic converter arrangement, ambient air temperature and travelling speed of a motor vehicle containing the combustion engine.

## Revendications

1. Procédé de régulation de la température d'un dispositif catalyseur (3) dans l'installation d'échappement des gaz d'un moteur à combustion interne (1), avec un piège à oxydes d'azote (5) prévu dans le dispositif catalyseur et avec un dispositif (2) pour modifier la température des gaz d'échappement, la température du piège à oxydes d'azote étant déterminée et le dispositif catalyseur fonctionnant via le dispositif de modification de la température des gaz d'échappement dans une plage de températures correspondant au rendement optimal du piège à oxydes d'azote, **caractérisé en ce que** la détermination de la température du piège à oxydes d'azote (5) est réalisée à l'aide d'un modèle de température, celui-ci renfermant comme valeurs d'entrées le débit masse des gaz d'échappement, les capacités thermiques et les coefficients de transmission thermique des constituants du dispositif catalyseur, la température de l'air ambiant et la vitesse de déplacement d'un véhicule automobile pourvu du moteur à combustion interne.

2. Procédé selon la revendication 1, **caractérisé en ce que** le fonctionnement dans la plage de rendement optimal du piège à oxydes d'azote est assuré par une unité de régulation PI, la température du piège à oxydes d'azote servant comme valeur d'entrée et une valeur de sortie servant à influencer le dispositif de modification de la température des gaz d'échappement.

3. Procédé selon la revendication 1 ou 2, **caractérisé en ce que** le modèle de température renferme comme valeur d'entrée supplémentaire une température des gaz d'échappement mesurée à proximité spatiale du dispositif catalyseur.

4. Procédé selon l'une des revendications 1 à 3, **caractérisé en ce que** le dispositif (2) pour modifier la température des gaz d'échappement fonctionne, après le démarrage du moteur à combustion interne (1) jusqu'à obtention de conditions déterminées au préalable, en mode démarrage, dans lequel le piège à oxydes d'azote (5) est chauffé aussi rapidement que possible pour atteindre une plage de températures de rendement optimal.

5. Procédé selon l'une des revendications 1 à 4, **caractérisé en ce que** le dispositif catalyseur comporte un piège à oxydes d'azote (5) et un catalyseur (4), qu'une régulation de la température des gaz d'échappement est obtenue dans une plage de températures correspondant au rendement optimal du piège à oxydes d'azote (5), dans le cas où le moteur à combustion interne (1) fonctionnerait avec un mélange air-carburant pauvre, et **en ce qu'**une régulation de la température des gaz d'échappement est obtenue dans une plage de températures correspondant au rendement optimal du catalyseur (4) et empêchant un endommagement du piège à oxydes d'azote dans le cas où le moteur à combustion interne serait alimenté avec un mélange air-carburant stoechiométrique ou riche.

6. Procédé selon l'une des revendications 1 à 5, **caractérisé en ce que** la modification de la température des gaz d'échappement est réalisée par guidage sélectif des gaz d'échappement du moteur à combustion interne (1) vers le dispositif catalyseur (3) en passant par divers circuits d'échappement des gaz, dans lesquels les gaz d'échappement subissent diverses pertes de chaleur.

7. Procédé selon l'une des revendications 1 à 6, **caractérisé en ce qu'**un mode de test est prévu, pour tester la capacité de fonctionnement de régulation de la température du dispositif catalyseur (3) en modulant les valeurs influant sur le dispositif (2) permettant de modifier la température des gaz d'échappement et en constatant l'effet de cette modulation en mesurant la température des gaz d'échappement à proximité spatiale du dispositif catalyseur.

8. Dispositif de mise en oeuvre du procédé selon l'une quelconque des revendications 1 à 7, avec un dispositif catalyseur (3) dans l'installation d'échappement des gaz d'un moteur à combustion interne (1), avec un piège à oxydes d'azote (5) prévu dans le dispositif catalyseur, avec un dispositif (2) pour modifier la température des gaz d'échappement, et avec un dispositif de régulation (7), **caractérisé par** un dispositif qui permet de déterminer la température du piège à oxydes d'azote à l'aide d'un modèle de température, celui-ci renfermant comme valeurs d'entrées le débit masse des gaz d'échappement, les capacités thermiques et les coefficients de transmission thermique des constituants du dispositif catalyseur, la température de l'air ambiant et la vitesse de déplacement d'un véhicule automobile pourvu du moteur à combustion interne.
